# EUROPÄISCHE PATENTANMELDUNG

(11) **EP 1 641 221 A1**
(43) Veröffentlichungstag der Anmeldung: **29.03.2006**
(21) Anmeldenummer: 04023024.5
(22) Anmeldetag: 28.09.2004
(51) Int. Cl.: H04L 29/12, H04L 12/56

(54) **Verfahren und Einrichtung zur Steuerung des Datenstroms bei einer Kommunikation zwischen IP-Centrex-Teilnehmern**

(71) Anmelder: SIEMENS AKTIENGESELLSCHAFT, 80333 München (DE)
(72) Erfinder: Zygan, Renate, Dr., 81477 München (DE)
(74) Vertreter: Berg, Peter

(57) **Zusammenfassung**

Verfahren zur Steuerung des Übertragungsweges von Nutzdatenpaketen bei einer Nachrichtenübertragung zwischen einem ersten und zumindest einem weiteren Teilnehmer (A, B) einer IP-Centrex-Gruppe in einem ersten paketvermittelnden Kommunikationsnetz (1), in welchem eine Netzgrenzeinheit (5) vorhanden ist, die durch einen Übertragungskanal (3) mit einem zweiten paketvermittelnden Kommunikationsnetz (2), in welchem auf einem Netzelement (7) Centrex-Dienst- und Leitsungsmerkmale für die IP-Centrex-Gruppe bereitgestellt werden, verbunden ist, wobei in der Netzgrenzeinheit (5), gesteuert durch herangeführte Signalisierungsinformationen mittels einer Adressumsetzungsfunktion (awareNAT) die von einem Teilnehmer (A, B) empfangene Nutzdatenpakete in das erste Kommunikationsnetz (1) zurück gelenkt werden.

## Beschreibung

### Technisches Gebiet

Die Erfindung betrifft ein Verfahren zur Steuerung des Übertragungsweges von Nutzdatenpaketen, bei einer Nachrichtenübertragung zwischen einem ersten und zumindest einem weiteren Teilnehmer einer IP-Centrex-Gruppe in einem ersten paketvermittelnden Kommunikationsnetz, in welchem eine Netzgrenzeinheit vorhanden ist, die durch einen Übertragungskanal mit einem zweiten paketvermittelnden Kommunikationsnetz, in welchem auf einem Netzelement Centrex-Dienst- und Leistungsmerkmale für die IP-Centrex-Gruppe bereitgestellt werden, verbunden ist.

### Stand der Technik

Unter dem Begriff "Centrex" (Central Office Exchange) wird in herkömmlichen, leitungsvermittelnden Telekommunikationsnetzen allgemein das Auslagern der Funktionalität einer privaten Nebenstellenanlage (Privat Brach Exchange PBX) in das öffentliche Netz eines Dienstanbieters verstanden. Der Dienstanbieter stellt dabei die Centrex-Funktionalität in Form von Software auf der Plattform eines öffentlichen Vermittlungsknoten bereit.

Heutzutage benutzen viele Unternehmen private paketvermittelnde Unternehmensnetze, bei denen eine IPbasierte Sprachkommunikation zwischen Mitarbeitern des Unternehmens entweder durch einen Sprachserver innerhalb des Unternehmensnetzes (IP-PBX) gesteuert werden kann, oder durch einen Sprachserver eines Centrex-Dienstanbieters außerhalb des Unternehmensnetzes(IP-Centrex). Im letztgenannten Fall werden die IP-Pakete über einen öffentlichen Breitbandnetzzugang zwischen dem privaten Unternehmensnetz und dem öffentlichen Netz des Centrex-Dienstanbieters übertragen.

Im folgenden bezieht sich der Begriff "IP-Centrex" auf eine IP-Netzarchitektur, bei der aus einem Netz eines Dienstanbieters die Centrex-Funktionalität einem Kunden angeboten wird und dieser Kunde seine Telefongespräche in Form eines Paketdatenstroms über einen breitbandigen Netzzugang in das Netz des Dienstanbieters übermittelt.

Zusätzlich zu bekannten Centrex-Dienst- und Leistungsmerkmalen bietet IP-Centrex einem Unternehmen eine Reihe weiterer Vorteile. IP-Centrex ermöglicht einem Kunden die bereits existierenden Lösungen für Datenverbindungen und Telefondiensten in ein Netz zu konsolidieren. Ferner spielt der geographische Standort der Kommunikationsteilnehmer überhaupt keine Rolle mehr, wenn eine Centrex-Gruppe definiert wird. Da die Übertragung der Sprachinformationen in Form von Datenpaketen über das Internet erfolgt, fallen vergleichsweise geringe Gesprächskosten an, die weitgehend unabhängig von der Entfernung sind.

Für IP-Centrex können verschiedene VoIP-Protokolle (Voice over Internet Protocol) verwendet werden, die als Standard vorliegen: Der Transport von Echtzeitdaten ist bei der ITU durch den grundlegenden Standard H.323 bzw. bei der IETF durch das SIP-Protokoll definiert. Die Übertragung der Nutzdaten (Echtzeit-Sprachpakete oder Bearer) erfolgt durch RTP/RTPC (Real Time Protocoll / Real Time Control Protocol). Da im Unternehmensnetz und im Dienstanbieternetz in der Regel unterschiedliche Adressräume verwendet werden, müssen diese aufeinander abgebildet werden. Für die Umsetzung von privaten IP-Adressen (Intranet) in solche IP-Adresssen, die im weltweiten Internet verwendet werden, stehen NAT-(Network Address Translation)-Protokolle zu Verfügung. Die Realisierung der Centrex-Funktionalität im Netz des Dienstanbieters erfolgt durch einen speziellen Centrex-Server, im folgenden auch als IP-Centex-Server oder kurz Sprachserver bezeichnet. Diese Sprachserver stellen durch Signalisierungsdaten den Verbindungsaufbau zwischen den Teilnehmern her und steuern den Strom der Nutzdaten der Gesprächsteilnehmer.

Bei bekannten IP-Centrex-Netzarchitekturen führt der Übertragungsweg der Nutzdatenpakete zunächst aus dem privaten Netz heraus in das öffentliche Netz des Dienstanbieters und von dort wieder zurück in das private Netz. Jede Richtung dieses Nutzdatenstroms belegt eine entsprechende Bandbreite im Übertragungskanal zwischen dem privaten und dem öffentlichen Netz. Pro intern geführten Gespräch wird im Breitbandnetzzugang in beiden Richtungen bis zu ca. 200 k Bit pro Sekunde von der verfügbaren Bandbreite belegt.

Es gibt Anwendungsfälle, bei denen der Sprachserver im Netz des Dienstanbieters keinen Zugriff auf diese IP-Pakete mit der Nutzinformation benötigt. Dies ist beispielsweise dann der Fall, wenn der Sprachserver an die Kommunikationspartner keine Ansage übermittelt. In diesem Fall ist die Belegung der Bandbreite im Übertragungskanal zwischen den beiden Netzen unnütz. Die Kosten eines öffentlichen Breitbandnetzzuganges sind aber direkt mit der Bandbreite korreliert, so dass beim Unternehmen Kosten anfallen, die insbesondere bei großen Unternehmen mit viel Centrex-Teilnehmern, gravierend sind, da jedes intern, zeitgleich geführte Gespräch über den Breitbandzugang geschleift wird. Dies kann die Wirtschaftlichkeit einer IP-Centrex-Lösung insgesamt in Frage stellen.

### Darstellung der Erfindung

Aufgabe der Erfindung ist es, ein Verfahren und eine Einrichtung zur Steuerung des Datenstroms bei einer Kommunikation zwischen IP-Centrex-Teilnehemern so anzugeben, dass im Breitbandübertragungskanal weniger Bandbreite beansprucht wird.

Diese Aufgabe wird durch ein Verfahren mit den Merkmale des Patentanspruchs 1 gelöst. Betreffend den einrichtungsbezogenen Aspekt der Erfindung wird dieses Problem durch die Merkmale des Patentanspruchs 10 bzw. des Patentanspruchs 11 gelöst. Auf vorteilhafte Ausgestaltungen der Erfindung nehmen die jeweiligen Unteransprüche Bezug.

Gemäß einem Grundgedanken der vorliegenden Erfindung wird der Nutzdatenstrom nur dann über den Breitbandanschluss in das öffentliche Netz geschleift, wenn die Nutzdaten, d.h. die Sprachpakete vom IP-Centrex-Server bearbeitet werden müssen. Dies ist beispielsweise der Fall, wenn der IP-Centrex-Server an einen oder an mehrere Teilnehmer der IP-Centrex-Grupp eine Ansage übermitteln will. In Fällen, in denen die Dienstlogik im IP-Centrex-Server keinen Zugriff auf die Sprachpakete benötigt, werden diese an der Netzgrenze des privaten Unternehmensnetzes in einem Gateway-Router abgefangen, zurück in das private Netz geroutet und dem jeweiligen Kommunikationspartner zugestellt. Dadurch wird bei einem unternehmensintern geführten Telefongesprächen im Übertragungskanal zwischen dem Unternehmensnetz und dem Netz des Dienstanbieters nicht mehr Bandbreite belegt, als nötig ist. Da nur die Signalisierung, nicht aber der Bearer übertragen wird, ist die Bandbreitenbelegung geringer. Für den Kunden stellt dies einen Kostenvorteil dar, denn bei ihm fallen weniger Investitions- und weniger Betriebskosten für den öffentlichen Breitbandnetzzugang an.

Eine bevorzugte Ausführungsform der Erfindung ist dadurch gekennzeichnet, dass in der Netzgrenzeinheit folgende Schritte ausgeführt werden:
a) Erkennen von Nutzdatenpaketen;
b) Feststellen, ob für eine Ziel-IP-Adresse und eine Absender-IP-Adressse eines von einem Teilnehmer abgesandten Nutzdatenpaketes je eine Adressumsetzungsfunktion aktiv ist;
c) Umsetzen der im Nutzdatenpaket angegebenen Absender-IP-Adresse in eine, im Adressraum des zweiten Kommunikationsnetzes für diesen Absender verwendete IP-Adresse und der Ziel-IP-Adresse in eine, im ersten Kommunikationsnetz für dieses Ziel verwendete IP-Adresse, falls die jeweilige Adressumsetzungsfunktion für diese Adressen jeweils aktiv ist;
d) Zurücklenken des Nutzdatenpaketes in das erste Kommunikationsnetz (1).

Der Vorteil dieser Ausführungsform liegt insbesondere darin, dass diese Verfahrensschritte mit einem vergleichsweise geringen Eingriff in die Funktionalität kommerziell verfügbarer Protokolle, wie beispielsweise H.323- bzw. SIPawareNAT, realisiert werden können.

Eine weitere vorteilhafte Ausgestaltung des erfindungsgemäßen Verfahrens ist dadurch gekennzeichnet, dass die Signalisierungsinformationen vom Netzelement an die Netzgrenzeinheit herangeführt werden und die Adressumsetzungsfunktion vom Netzelement gesteuert wird. Dadurch kann je nach Bedarf der Bearer, d.h. die Sprachpakete bedarfsabhängig an den Sprachserver geführt werden. Ein derartiger Bedarf liegt z.B. dann vor, wenn die Sprachpakete vom Centrex-Sprachserver behandelt werden sollen. Dies ist der Fall, wenn an die Centrex-Teilnehmer vom Centrex-Server eine Ansage übermittelt werden soll.

In einer weiteren bevorzugten Ausführungsform ist vorgesehen, dass die Signalisierungsinformationen mittels eines Signalisierungsprotokolls zur Netzgrenzeinheit übertragen werden, wobei auf dem Signalisierungsweg zwischen dem Netzelement und der Netzgrenzeinrichtung das Signalisierungsprotokoll um ein Parameterfeld erweitert wird, in welchem eine, vom Netzelement an die Adressumsetzungsfunktion gerichtete Steuerinformation übermittelt wird. Diese Erweiterung an verfügbaren Signalisierungsprotokollen erfordert nur einen vergleichsweise geringen Aufwand.

Ein weiterer Vorteil des erfindungsgemäßen Verfahrens ist darin zu sehen, dass bei Gesprächen zwischen Centrex-Teilnehmern innerhalb eines Unternehmens die zeitliche Verzögerung der Nutzdatenpakete geringer ist, da eine Weiterleitung in das Dienstanbieternetz nicht erfolgt. Dadurch ist die Qualität der Sprachübertragung besser.

Ein weiter Vorteil ergibt sich bei Telefongesprächen, die von einem oder mehreren Teilnehmer der IP-Centrex-Gruppe nach außen geführt werden. Bei diesen externen Gesprächen ist eine Adressumsetzung nicht notwendig. Durch die Übermittlung entsprechender Steuerinformationen vom Sprachserver im Dienstanbieternetz zum Gateway-Router im Unternehmensnetz, wird sicher gestellt, das die in diesem Fall nicht erforderliche Adressumsetzung abgestellt wird. Folge davon ist, dass bei externen Gesprächen die Verzögerung der Sprachpakete geringer ist, was ebenfalls die Sprachübertragungsqualität verbessert.

### Kurzbeschreibung der Zeichnung

Zur weiteren Erläuterung der Erfindung wird im nachfolgenden Teil der Beschreibung auf die Zeichnungen Bezug genommen in denen weitere vorteilhafte Ausgestaltungen, Einzelheiten und Weiterbildungen der Erfindung zu entnehmen sind. Es zeigen:
- Figur 1: eine IP-Centrex-Netzstruktur, bestehend aus einem privaten Netz eines Unternehmens das über einen Breitbandnetzzugang an das Netz eines Dienstanbieters angeschlossen ist, wobei die Lenkung des Nutzdatenstroms gemäß dem Stand der Technik durchgeführt ist;
- Figur 2: die IP-Centrex-Netzstruktur gemäß Figur 1, mit einer Lenkung des Nutzdatenstroms gemäß einem Ausführungsbeispiel der Erfindung.

### Ausführung der Erfindung

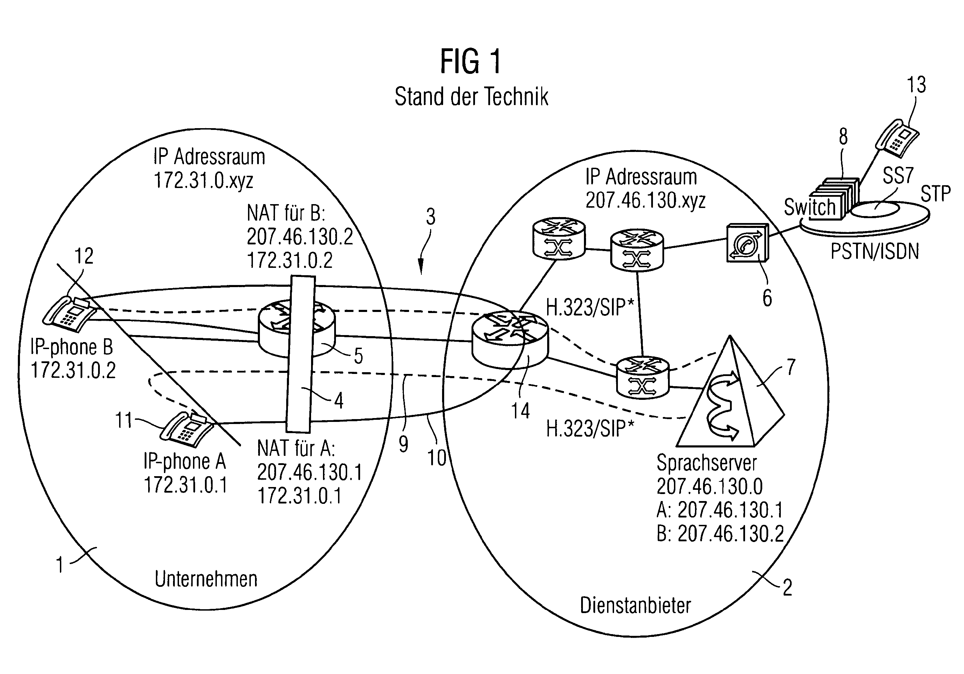

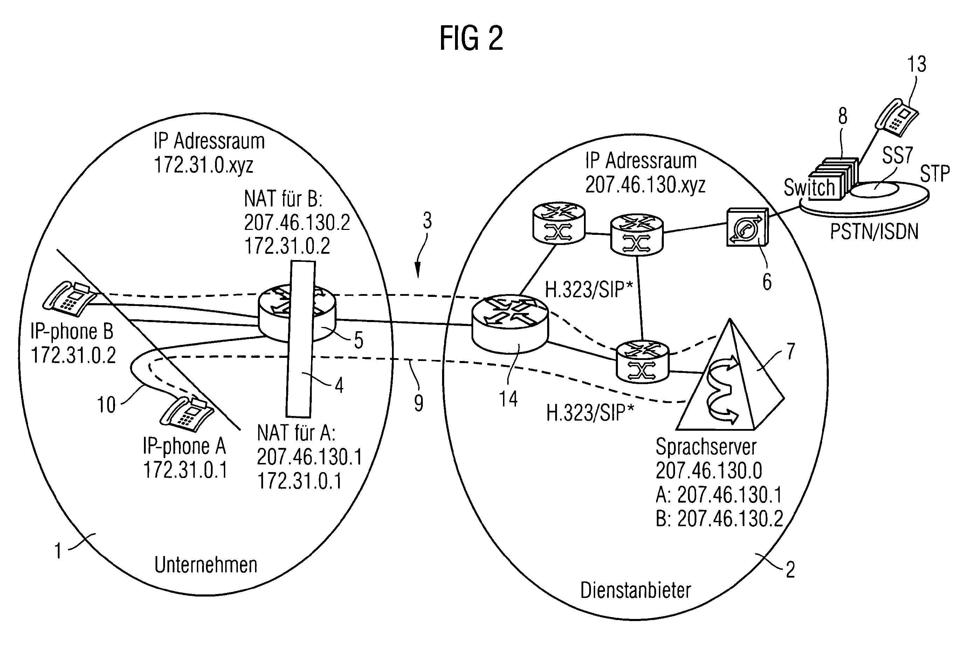

In Figur 1 ist eine IP-Centrex-Netzstruktur zu sehen, bei der ein paketvermittelndes, privates Kommunikationsnetz 1 eines Unternehmens über einen Breitbandzugang 3 mit einem zweiten, paketvermittelnden Kommunikationsnetz 2 eines Centrex-Dienstanbieters verbunden ist. Im Netz 1 sind die gezeichneten Teilnehmer A und B einer Centrex-Gruppe zugeordnet. Bei einer "Voice over IP"- Kommunikation zwischen den Teilnehmern A und B, wird die Verbindung über ein Netzelement im Netz 2, einem Centrex-Sprachserver 7 hergestellt. Der Sprachserver 7 verwaltet die Dienst- und Leistungsmerkmale der Centrex-Teilnhmer A und B. Bei einem Telefongespräch zwischen den Teilnehmern A und B wird die analoge Sprachinformation digitalisiert, komprimiert und in Form von Nutzdatenpaketen, also Sprachpaketen über Router (in Figur 1 und Figur 2 sind nur die Router 5 und 14 gezeichnet), nach bestimmten Regeln zum Kommunikationspartner weitergeleitet. Um eine Verbindung herzustellen, wird die gewählte Rufnummer in eine IP-Adresse umgesetzt. Die IP Adresse erscheint als Zielinformation im Nachrichtenkopf eines jeden Datenpaketes. Die IP-Adressen bestehen jeweils aus vier Bytes bzw. vier Quads, die durch Punkte getrennt sind.

Die Übertragung der Nutzdatenpakete erfolgt gemäß dem Protokoll RTP/RTPC. Die Signalisierungsinformation wird im Netz 1 und im Netz 2 gemäß dem ITU-Standard H.323 bzw. gemäß dem SIP-Protokoll der IETF übertragen.

Im Kommunikationsnetz 1 sind zwei IP-Phone 11 und 12 gezeichnet, die zu den Teilnehmern A bzw. B gehören. In den beiden Netzen 1, 2 werden unterschiedliche Adressräume verwendet. Das Endgerät 11 hat im Adressraum des Unternehmensnetzes 1 (172.31.0. xyz) die IP-Adresse 172.31.0.1; das Endgerät 12 hat in diesem Adressraum die IP-Adresse 172.31.0.2.

Im Kommunikationsnetz 1 ist der Breitbandnetzzugang 3 mit einer Netzgrenzeinheit, einem Gateway-Router 5 verbunden. Der Gateway-Router 5 besitzt zum einen die Funktionalität einer Firewall 4. Zum anderen besitzt er die Funktionalität der Adressumsetzung (NAT Network Address-Translation), da der IP-Adressraum im Unternehmensnetz 2 und der IP-Adressraum im Netz 2 des Netzbetreibers i.A. unterschiedlich ist.

Alle IP-Pakete, die im Rahmen der Sprachkommunikation zwischen Mitarbeitern des Unternehmens ausgetauscht werden, werden über diesen Gateway-Router 5 geroutet und über die Breitbandleitung 3 in das Netz 2 des Dienstanbieters eingeleitet. Der Datenstrom dieser IP-Pakete beinhaltet sowohl die IP-Pakete, die für die Steuerung des Verbindungsaufbaus bzw. des Verbindungsaufbaus, d.h. für die Signalisierung erforderlich ist, und beinhaltet auch den Nutzdatenstrom, das heißt jene IP-Pakete (Bearer), welche die eigentliche Sprachinformation beinhalten.

Damit überhaupt eine Voice over IP-Kommunikation der Teilnehmer A und B zu Stande kommen kann, muss die NAT-Funktionen die für diese Session relevanten IP-Pakete der Sprachkommunikation zunächst erkennen können. Dann müssen in diesen erkannten IP-Paketen protokollabhängige Funktionen ausgeführt werden. Es müssen die IP-Adressen geändert werden und zwar nicht nur im IP-Header, sondern auch im jeweils verwendeten Signalisierungsprotokoll. Durch die NAT-Funktion werden die im Adressraum des Unternehmensnetzes 1 definierten Adressen in solche des öffentlichen Netzes 2 übersetzt. Die IP-Adresse des A-Teilnehmers 172.31.0.1 in Netz 1 wird auf die IP-Adresse 207.46.130.1 im Netz 2 umgesetzt. Analoges gilt für die IP-Adresse 172.31.0.2 des B-Teilnehmers im Netz 1, die im Netz 2 auf der IP-Adresse 207.46.130.2 abgebildet wird. Für die NAT-Funktionalität sind Computerprogrammprodukte sowohl in der H.323- als auch in der SIP-Welt handelsüblich. Bei der Anwendung dieser Produkte tritt das eingangs geschilderte Bandbreitenproblem auf. In der Schemazeichnung in Figur 1 ist dies grafisch dadurch zum Ausdruck gebracht, dass neben der mit dem Bezugszeichen 9 gekennzeichneten punktierten Linie, die den Weg der Signalisierungsinformationen andeutet, auch der Nutzdatenstrom (durchgezogene Linie 10) über den Breitbandnetzzugang 3 geführt ist. In jenen Fällen, in denen der Nutzdatenstrom aber von der Dienstlogik im Sprachserver 7 nicht benötigt wird, belegt diese Nutzdatenübertragung im Übertragungskanal 3 eine Bandbreite, die eigentlich nicht erforderlich wäre.

Wie eingangs erwähnt, könnte man - um das oben benannte Bandbreitenproblem zu vermeiden - für die Sprachkommunikation zwischen Mitarbeitern eines Unternehmens auch die Variante einer Netzarchitektur die von einer IP-PBX gesteuert wird wählen. Bei dieser Lösung würden aber die ebenfalls eingangs hervorgehobenen Vorteile von IP-Centrex wegfallen.

Gemäß der Erfindung ist nun vorgesehen, dass bei einer Kommunikation von IP-Centrex-Teilnehmern untereinander nur die IP-Pakete mit der VoIP-Signalisierung zum Netz 2 des Dienstanbieters übertragen werden. Die RTP/RTCP-Pakete, welche die Sprachinformation beinhalten, werden vom Gateway-Router 5 - sofern dies nicht explizit vom Sprachserver 7 angefordert wird - direkt in das private Netz 2 des Unternehmens zurück geroutet. Auf diese Weise gelangen keine Pakete mit Sprachinformationen (die IP-Centrex-Teilenhmer untereinander austauschen) von Netz 1 in Netz 2 und es werden dem gemäß auch keine Sprachpakete wieder zurück übertragen. Folglich wird im Übertragungskanal 3 hierfür auch keine Bandbreite beansprucht.

Um diese Umlenkung des Nutzdatenstroms zu erreichen, muss in der Signalisierung eine entsprechende Änderung vorgenommen werden, das heißt das H.323 bzw. SIP-Protokoll ist entsprechend der Erfindung erweitert um eine H.323 bzw. SIPawareNAT-Funktion.

Gemäß dieser Änderung in Signalisierungsprotokoll wird im Gateway-Router 5 in einem ersten Verfahrensschritt erkannt, ob es sich bei einem Paket um ein Nutzdatenpaket handelt.

In einem zweiten Schritt wird bei diesem als Nutzdatenpaket identifizierten Paket festgestellt, ob für die von einem Absender im Unternehmensnetz 1 angegebene Ziel-IP-Adresse (die aus dem IP-Adressraum des Dienstanbieternetzes 2 stammt) und für die Absender-IP Adresse (die aus dem IP-Adressraum des Unternehmensnetzes 1 stammt) je eine NAT-Funktion aktiv ist.

Ist dies der Fall, so folgt für dieses Nachrichtenpaket in einem dritten Schritt eine Adressumsetzung: Es wird zum einen die im Nutzdatenpaket angegebene IP-Adresse des Absenders umgesetzt in die von Dienstanbieter für diesen Absender verwendete IP-Adresse; zum anderen wird die im Nutzdatenpaket angegebene Ziel-IP-Adresse in die im Unternehmensnetz 1 für dieses Ziel verwendete IP-Adresse umgesetzt.

In einem viertel Schritt wird vom Gateway-Router 5 dieses Nutzdatenpaket mit der umgesetzten Adressierung direkt in das Unternehmensnetz 1 zurück geroutet.

Mit den andren Nutzdatenpaketen der Session wird entsprechend verfahren.

Das erfindungsgemäße Verfahren ist in Figur 2 grafisch zum Ausdruck gebracht. Die Darstellung der Figur 2 unterscheidet sich von der Darstellung der Figur 1 dadurch, dass gemäß der Erfindung bei einer internen Kommunikation, beispielsweise zwischen dem Centrex-Teilnehmer A und dem Centrex-Teilnehmer B, die Nutzdatenpakete im Netz des Unternehmens 1 verbleiben und daher die Bandbreite des Übertragungskanals 3 nicht mehr damit belastet wird. Hierfür ist die an sich bekannte H.323- bzw. SIP-NAT-Funktionalität erweitert. Wie aus Figur 2 leicht zu entnehmen ist, führt der als durchgezogene Linie 10 dargestellte Weg der Nutzdatenpakete von einem der Teilnehmer A oder B nicht mehr zum Router 14 im Netz 2, sondern wird bereits im Gateway-Router 5 abgefangen und in das Netz 1 zurück geroutet.

Gemäß einer Weiterbildung der Erfindung ist vorgesehen, dass der Gateway-Router 5 diese Sonderbehandlung von RTP/RTPC-Paketen nur für solche Gespräche bzw. NAT-Sitzungen durchführt, für die dies explizit vom Sprachserver 7 des Dienstanbieters angefordert wird. Hierfür ist das Signalisierungsprotokoll H.323/SIP entsprechend modifiziert. Zwischen dem Sprachserver 7 und dem Gateway-Router 5 ist das an sich bekannte H.323- bzw. SIP-Protokoll um einen optionalen Parameter erweitert. Dieser Parameter beinhaltet eine Steuerinformation, durch die die Adressumsetzfunktion awareNAT im Gateway-Router 5 vom Sprachserver gesteuert werden kann. M.a.W. der Parameter gibt an, ob die Sonderbehandlung von RTP/RTPC-Paketen durchgeführt werden soll. Dadurch kann der Nutzdatenstrom bedarfsabhängig umgelenkt werden. Das heißt, wenn der Sprachserver 7 beispielsweise eine Ansage an die Teilnehmer A bzw. B übermitteln will, lenkt er den Nutzdatenstrom zu sich. Wenn er die Sprachpakete nicht behandeln will, weist er den Gateway-Router 5 an, die Nutzdatenpakete einer internen Centrex-Kommunikation unmittelbar zurück in das Unternehmensnetz 1 zu lenken.

Die oben beschriebenen Netzeinheiten, wie Sprachserver, Gateway-Router, Netzgrenzeinheit sind selbstverständlich nicht eingeschränkt auf eine physikalische Baueinheit zu verstehen, sondern es ist dem einschlägigen Fachmann klar, dass unter diesen Begriffen jeweils eine Funktionalität zu verstehen ist, die ganz oder teilweise auf mehreren physikalischen Einrichtungen im Netz verteilt angeordnet sein kann. Die einzelnen Teile sind vorteilhaft durch Software realisiert. Es kann aber auch sein, dass zumindest Teile durch Hardware bzw. durch Firmware gebildet sind.

In den Darstellungen der Figur 1 und Figur 2 ist auch noch eine Anbindung an ein herkömmliches leitungsvermittelndes Telekommunikationsnetz (PSTN/ISDN) gezeichnet, die durch die Verbindung zwischen dem Voice over IP Router 6 des Kommunikationsnetzes 2 und durch die Vermittlungsstelle 8 (Switch) des PSTN-Netzes mit angeschlossenem Telefon 13 hergestellt ist.

Zusammenstellung der verwendeten Bezugszeichen
- 1: Erstes paketvermittelndes Kommunikationsnetz, Unternehmensnetz
- 2: Zweites paketvermittelndes Kommunikationsnetz, Dienstanbieternetz
- 3: Breitbandübertragungskanal
- 4: Firewall
- 5: Netzgrenzeinheit, Gateway-Router in 1
- 6: Voice over IP Gateway
- 7: Netzelement, Centrex-IP-Sprachserver
- 8: Vermittlungsknoten im PSTN/ISDN
- 9: Signalisierungskanal
- 10: Nutzdatenkanal
- 11: IP-Telefon des Centrex-A-Teilnehmer
- 12: IP-Telefon des Centrex-B-Teilnehmer
- 13: Telefon
- 14: Router in 2

## Patentansprüche

1. Verfahren zur Steuerung des Übertragungsweges von Nutzdatenpaketen, bei einer Nachrichtenübertragung zwischen einem ersten und zumindest einem weiteren Teilnehmer (A, B) einer IP-Centrex-Gruppe in einem ersten paketvermittelnden Kommunikationsnetz (1), in welchem eine Netzgrenzeinheit (5) vorhanden ist, die durch einen Übertragungskanal (3) mit einem zweiten paketvermittelnden Kommunikationsnetz (2), in welchem auf einem Netzelement (7) Centrex-Dienst- und Leistungsmerkmale für die IP-Centrex-Gruppe bereitgestellt werden, verbunden ist, wobei in der Netzgrenzeinheit (5), gesteuert durch herangeführte Signalisierungsinformationen mittels einer Adressumsetzungsfunktion (awareNAT) die von einem Teilnehmer (A, B) empfangene Nutzdatenpakete in das erste Kommunikationsnetz (1) zurück gelenkt werden.

2. Verfahren nach Anspruch 1, **dadurch gekennzeichnet, dass** in der Netzgrenzeinheit (5) durch die Adressumsetzungsfunktion (awareNAT) folgende Schritte ausgeführt werden:
a) Erkennen von Nutzdatenpaketen;
b) Feststellen, ob für eine Ziel-IP-Adresse und eine Absender-IP-Adressse eines von einem Teilnehmer abgesandten Nutzdatenpaketes je eine Adressumsetzungsfunktion aktiv ist;
c) Umsetzen der im Nutzdatenpaket angegebenen Absender-IP-Adresse in eine, im Adressraum des zweiten Kommunikationsnetzes (2) für diesen Absender verwendete IP-Adresse und der Ziel-IP-Adresse in eine, im ersten Kommunikationsnetz (1) für dieses Ziel verwendete IP-Adresse, falls die jeweilige Adressumsetzungsfunktion für diese Adressen jeweils aktiv ist;
d) Zurücklenken des Nutzdatenpaketes in das erste Kommunikationsnetz (1).

3. Verfahren nach Anspruch 1 oder 2, **dadurch gekennzeichnet, dass** die Signalisierungsinformationen vom Netzelement (7) an die Netzgrenzeinheit (5) herangeführt werden und die Adressumsetzungsfunktion (awareNAT) vom Netzelement (7) gesteuert wird.

4. Verfahren nach Anspruch 3, **dadurch gekennzeichnet, dass** die Signalisierungsinformationen mittels eines Signalisierungsprotokolls zur Netzgrenzeinheit (5) übertragen werden, wobei auf dem Signalisierungsweg zwischen dem Netzelement (7) und der Netzgrenzeinheit (5) das Signalisierungsprotokoll um ein Parameterfeld erweitert wird, in welchem vom Netzelement (7) an die Adressumsetzungsfunktion (awareNAT) gerichtete Steuerinformationen übermittelt werden.

5. Verfahren nach Anspruch 4, **dadurch gekennzeichnet, dass**, die Steuerinformationen im Parameterfeld durch das Netzelement (7) vorgegeben werden.

6. Verfahren nach Anspruch 4 oder 5, **dadurch gekennzeichnet, dass** für die Übertragung der Signalisierungsinformationen ein auf H.323 oder SIP aufbauendes Signalisierungsprotokoll verwendet wird.

7. Verfahren nach einem der vorhergehenden Ansprüche, **dadurch gekennzeichnet, dass** die Nutzdatenpakete mittels des Nachrichtenübertragungsprotokolls RTP/RTPC oder mittels einem diesen RTP/RTPC Nachrichtenübertragungsprotokoll ähnlichem Nachrichtenübertragungsprotokoll übertragen werden.

8. Verfahren nach einem der vorhergehenden Ansprüche, **dadurch gekennzeichnet, dass** als Netzgrenzeinheit (5) ein Gateway-Router vorgesehen wird.

9. Verfahren nach einem der vorhergehenden Ansprüche, **dadurch gekennzeichnet, dass** als Netzelement (7) ein Sprachserver vorgesehen wird.

10. Kommunikationsnetz, das einen Netzknoten aufweist, in welchem ein Verfahren gemäß einem der Ansprüche 1 bis 9 zur Anwendung kommt.

11. Netzgrenzeinheit, welche IP-Centrex-Teilnehmer (A, B) in einem ersten paketvermittelnden Kommunikationsnetz (1) über einen breitbandigen Übertragungskanal (3) mit einem zweiten paketvermittelnden Kommunikationsnetz (2) verbindet, wobei im zweiten Kommunikationsnetz (2) ein Netzelement (7) vorhanden ist, welches Centrex-Dienst- und Leitsungsmerkmale für die IP-Centrex-Teilnehmer (A, B) bereitstellt, welche eine Adressumsetzungsfunktion (awareNAT) aufweist, die folgende Schritte ausführt:
a) Erkennen von Nutzdatenpaketen,
b) Feststellen, ob für eine Ziel-IP-Adresse und eine Absender-IP-Adressse eines von einem der Teilnehmer (A, B) abgesandten Nutzdatenpaketes je eine Adressumsetzungsfunktion (awareNAT) aktiv ist,
c) Umsetzen der im Nutzdatenpaket angegebenen Absender-IP-Adresse in eine, im Adressraum des zweiten Kommunikationsnetzes (2) für diesen Absender verwendete IP-Adresse und der Ziel-IP-Adresse in eine, im ersten Kommunikationsnetz (1) für dieses Ziel verwendete IP-Adresse, falls die jeweilige Adressumsetzungsfunktion (awareNAT) für diese Adressen jeweils aktiv ist,
d) Zurücklenken des Nutzdatenpaketes in das erste Kommunikationsnetz (1).
